# EUROPEAN PATENT SPECIFICATION

(11) **EP 1 461 567 B1**
(45) Date of publication and mention of the grant of the patent: **09.08.2006**
(21) Application number: 02789026.8
(22) Date of filing: 19.12.2002
(51) Int. Cl.: F22G 3/00, F28G 7/00

(54) **STEAM SUPER HEATER COMPRISING SHIELD PIPES**
DAMPFÜBERHITZER MIT SCHUTZROHREN
SURCHAUFFEUR A VAPEUR COMPORTANT DES CONDUITES DE BLINDAGE

(30) Priority: 19.12.2001 NL 1019612
(43) Date of publication of application: 29.09.2004
(73) Proprietor: Gemeente Amsterdam, Gemeentelijke Dienst Afvalverwerking, 1045 BA Amsterdam (NL)
(72) Inventor: VAN BERLO, Marcellus, Antonius, Jozef, NL-1058 EN Amsterdam (NL)
(74) Representative: Kupecz, Arpad
(86) International application number: PCT/NL2002/000849
(87) International publication number: WO 2003/052319

(56) References cited:
- DE-B- 1 012 614
- DE-C- 3 841 122
- NL-C- 1 015 438
- US-A- 2 358 358
- US-A- 4 838 212

## Description

The present invention relates to a heat exchanger according to the preamble of claim 1. A heat exchanger of this kind is very useful especially, but not exclusively, for the recovery of heat energy from flue gases from a waste incineration plant. Although hereafter reference will be made mainly to the use of the heat exchanger in waste incineration plants, it is also possible to use the same with other hot gases.

In waste incineration plants it is usual practice to use the hot flue gases released during incineration of waste for the generation of steam. To this end the waste incineration plant (WIP) possesses a heat exchanger comprising pipes through which steam is conducted that has to be heated further with the aid of flue gases in order to obtain superheated steam. For this purpose steam that is formed earlier is conducted via a steam drum as known in the art, through a heat exchanger for superheating. Such a heat exchanger is generally known as a steam superheater. In a waste incineration boiler this superheater generally consists of a plurality of sections, each section consisting of a plurality of frames, and each frame consisting of two headers between which a plurality of parallel connected pipes are provided that form the heat exchanging surface. Usually the frames are mounted one immediately behind the other, at right angles to the flow direction of the flue gas.

A general drawback of waste is that it contains many pollutants, so that its incineration generally causes corrosion in the parts of the plant coming into contact with the hot flue gases. The measures to combat corrosion (low temperatures of both the heat-exchanging surface and the flue gases coming into contact therewith) are taken at the expense of the total productivity and efficiency.

More and more often corrosion-resistant materials are used such as nickel-chromium alloys. However, these are very expensive materials, resulting in high costs for the manufacture of heat exchangers.

The heat exchanger as indicated in the preamble of claim 1 is known from the German patent application with publication number DE 38411122 C1. In this patent application, it is mentioned that a screen pipe be placed in front of superheater pipes, so as to protect said superheater pipes against erosion. To that end, the screen pipes should have a diameter which is larger than the diameter of the superheater pipes. Although this does provide a good protection against erosion, it has shown that this embodiment can be further improved.

The invention has the objective to provide an improved apparatus.

The invention has the particular objective to provide a heat exchanger that can also be used very well in waste incineration plants.

To this end the invention provides a heat exchanger of the kind mentioned in the preamble, which is characterised by the measure mentioned in the characterising part of claim 1. With this measure, the advantage is obtained that an excellent removal of pollutants from the flue gases is obtained. As an additional advantage, the flow resistance is less than with the embodiment of DE 38411122 C1. Totally unexpected, it has shown that the Von Karman vortices decrease with this measure. The additional advantage is that the amount of dust (pollutants) on the superheater pipes is diminished. This is contrary to the teachings in the art, where it is generally accepted that the Von Karman vortices should be increased to improve the exchange of heat.

In this way the corrosion, erosion and fouling problems with waste incineration are avoided or reduced. The production cost of the shield pipes is very low and replacement of the pipes is simple so that the effect of wear on them involves only minor expenses. The practical drawbacks of high flue gas temperatures in the superheater and reheater encountered with waste incineration are thus avoided. The shield pipes may be suitable empty pipes. These are simply placed immediately before the superheater pipes, viewed in the direction of flow, so that the shield pipes catch substantially all the pollutants in the flue gases. The superheater pipes will thus stay substantially free from pollutants and will be able to remain in operation longer. As only the shield pipes need to be replaced, this will involve very simple and therefore only minor operations.

DE 41 03 440 "Anordnung zur Befestigung von Verschleißschutzrohren an Heizflächen", describes a comparable solution where by means of half-pipes functioning as shells mounted in front of the superheater pipes, a screening effect is obtained. This embodiment is also regularly used in practice in waste incineration boilers in order to render even a problematic steam superheater effective. However, in general the fast wearing half-pipes are not preferred when a new waste incinerator boiler is being built.

DE 43 34 155 : "Anordnung zum Schutz von Rohren eines Rohrpaketes in einem staubbeladenen Gasstrom", describes a shield whereby a grid immediately after the bend in the portion where the flue gasses have the highest velocity, provides a shield against the flue gases. The objective here is comparable to the one in the present application but a completely different specific embodiment is involved, focussing only on combating the effects in the section immediately following a bend.

DE 1012614 : "Schot-tenüberhitzer", describes a baffle superheater located in the radiation part of the boiler and wherein the flue gases flow parallel to the baffles formed by banked pipes. The shielding effect is directed at full radiation from the fire immediately underneath. To this end the shield pipe is provided with better cooling than the other pipes of the baffle superheater by using an increased steam flow having a low temperature, or even a water-cooled pipe.

A comparable description can be found in US 4,838,212 "Superheating of steam generating".

In the present application a similar solution is used, however, with the aim of catching dust particles instead of providing a shield from radiation. In the present invention the location is therefore not in the radiation part but in the convection part of the boiler, with the heat being transferred directly to the pipes due to the square approach of the flue gases. The dust in the flue gases therefore plays an important part in the formation of deposit, corrosion and erosion. The dust particles strike the surface of the pipes at the velocity of the flue gas carrying them along. The particles, which due to the high temperature have become slightly sticky, are able to adhere and accumulate to form large packs of deposit. When these packs are removed by cleaning (for example by means of rapping) and the pipe is stripped clean once more, the dust particles may also damage the metal surface directly before growing anew to form a deposit. Especially pipes made from nickel-chromium alloys whose corrosion-protective action consists of an extremely thin oxide-film, this protective layer may be damaged. This causes accelerated corrosion until the oxide-film is restored.

The NL-1 015 438 High Efficiency - Waste Fired Power Plant) mentions as most important measure the maintenance of low flue gas velocities as method for limiting the impact of the dust particles, and a low temperature to ensure that the material is able to protect itself by forming a new oxide-film. In order to protect the first pipe of a section exposed to heavy wear, the document also mentions the use of water cooling for said pipe.

US-A 2,358,358 relates to a horizontal boiler, in which a horizontal flow of flue gases passes through a bundle of vertical pipes for the generation of steam. Although the effect of erosion (wear) of the superheater pipes is mentioned (column 1, lines 7 - 28) no-measures for counteracting this effect are given.

The present application therefore proposes to not only protect said first pipe by means of water cooling, but also to enhance the protective action of said first pipe by giving it a diameter that is different from that of the superheater pipes behind the first pipe.

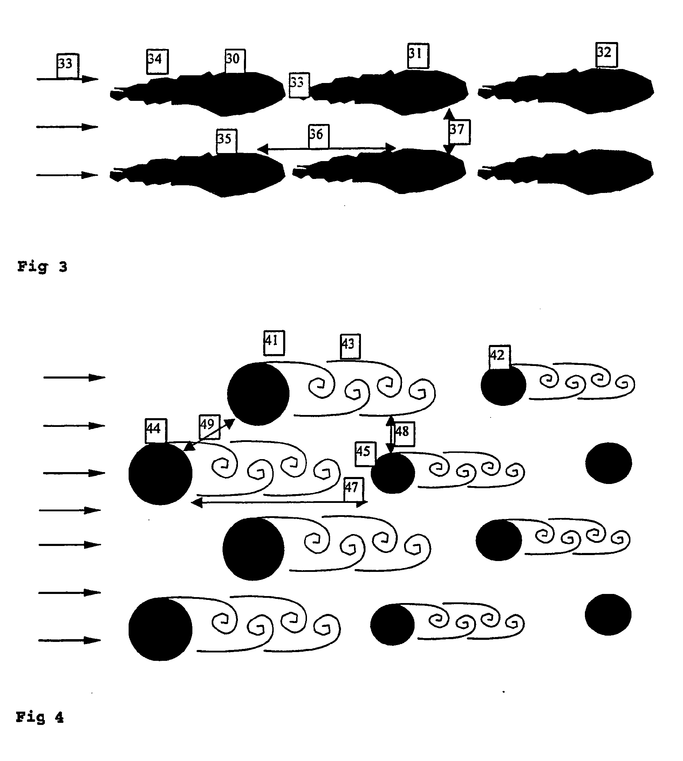

The choice of the correct diameter of the shield pipes in relation to the diameter of the superheater pipes must be based on an accurate analysis, with velocities and the mutual distance playing an important role. The diameter is then chosen such that "Von Karman vortices" (see Figure 3) will not lead to a local increase of the flow velocities and/or the amount of dust at the surface of the superheater pipes located behind. This is in contrast with the typical design methods, where the local turbulences are used to increase the heat transfer.

The invention will now be described further with reference to the drawings.
Fig. 1 shows a schematic view of a waste incineration plant, wherein flue gases are conducted from a grate section through a first, second and third draught, after which the flue gases are conducted via a heat exchanger (4), consisting of superheaters (5) and economiser, to the boiler outlet.
Fig. 2 shows a schematic top view of a plant according to Fig. 1.
Fig. 3 shows a top view of a usual in-line configuration of pipes in a heat exchanger according to the present invention.
Figs. 4-7 show a top view of a preferred embodiment of the pipes in a heat exchanger according to the invention.

Identical reference numbers in the figures always have the same meaning.

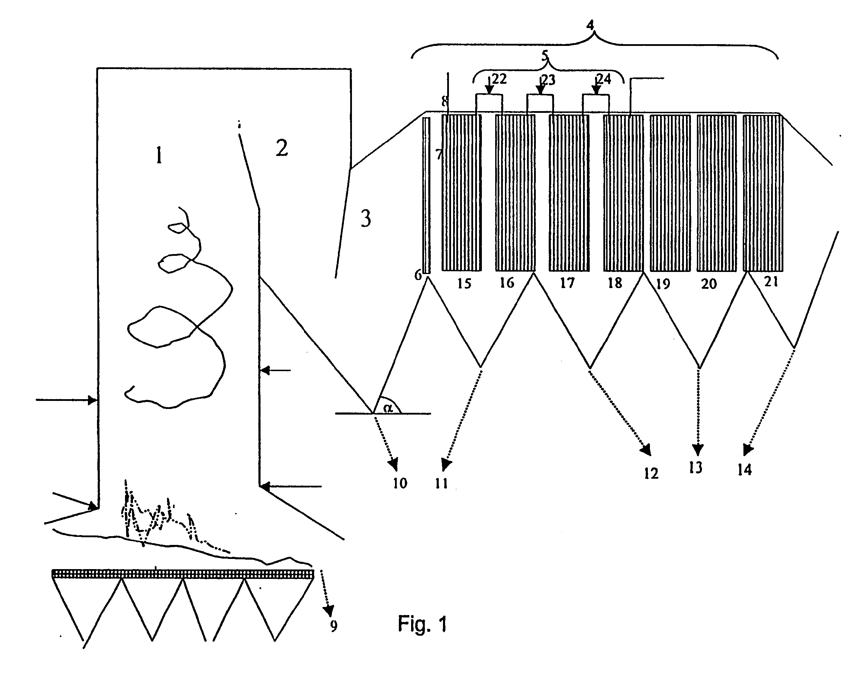

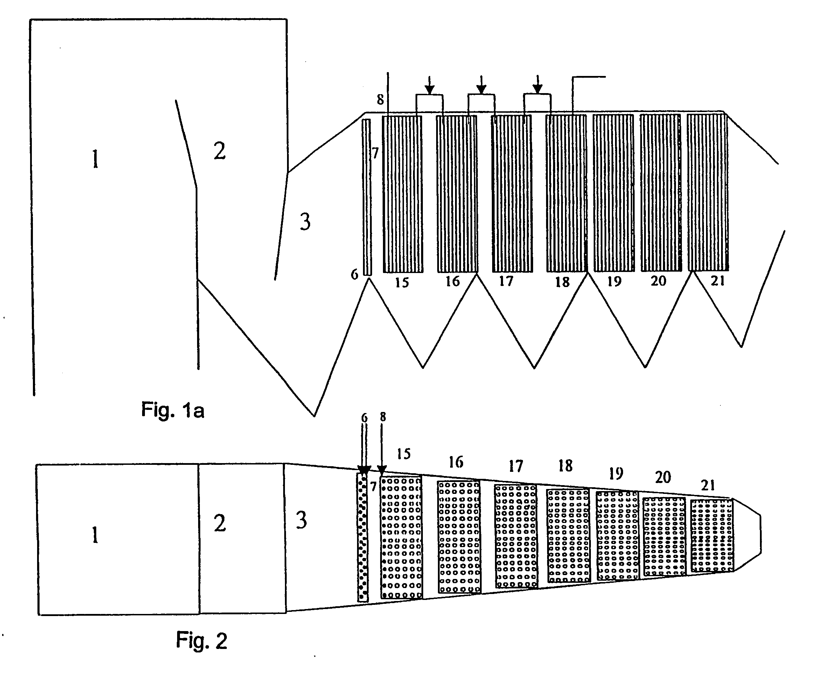

Fig. 1 shows a schematic view of a waste incineration plant. The flue gases are fed to a first draught 1, where they rise vertically, being subsequently diverted to a second draught 2, where the flue gases are conducted downward and diverted to a further draught 3. The first draught is constructed, among other things, from a known membrane wall (not shown).

The flue gases leaving the third draft are subsequently conducted to a heat exchanger 4 in the form of a steam superheater 5 (in Dutch generally indicated as OVO). In the form represented, this OVO comprises four different series of heat exchanger pipes 15-18. At the beginning of the heat exchanger 4 a so-called evaporator wall 6 is provided. This evaporator wall 6 serves to even out the flow of flue gasses approaching the heat exchanger 5. To this end the evaporator wall 6 preferably comprises two rows of evaporator pipes, as shown in Fig. 2. After these two rows of evaporator pipes there is preferably a small open space 7, after which one following row of evaporator pipes 8 is provided, after which the first rows of heat exchanger pipes are placed behind one another, aligned with the pipes of the last row of evaporator pipes, as can be seen in Fig. 2. The small open space 7 is preferably long enough to allow the flue gas velocity to be evened out over the entire flow area in this open gap 7, so that its flow velocity is practically everywhere the same.

In the prior art, the evaporator wall 6 is subject to fly ash deposit, and rapid cooling of the flue gases affects the core of the fly ash particles contained in the flue gases only after some delay, so that they will retain an interior temperature of T > 800°C with the result that they are still in a so-called "sticky phase". When these particles collide with the successive pipes of the evaporator wall, they will therefore adhere to its surface. These particles will to a considerable degree also adhere to the heat exchanger pipes. This may be reduced by lowering the velocity of the flue gas. This reduction of the velocity of the flue gas also results in greatly improving the removal of the boiler ash 10. This also results in a reduction of the deposition of fouling on the heat exchanger pipes. This deposit of ash may be removed from the pipes by a method known in the art.

In practice it is preferred for the evaporator wall 6 to even out the flow in order to avoid local high velocities. The flue gas velocity is preferably 3 to 4 m/s, which results in the surface temperature of the pipes staying below the flue gas temperature. The frames of the evaporator section 6 will preferably be provided over the entire width of the gas through-put at the heat exchanger 4. However, it is possible to reduce the total number of pipes per frame in the evaporator bank 6, with the mutual distance between the pipes being 20 to 50 cm. If several rows of evaporator walls 6 are used, it is preferred for the pipes in the individual rows to be arranged in the heat exchanger so as to be staggered in relation to one another, as shown in the Figures 4 to 7. It is preferred for all the pipes to be equidistanced from one another. In this manner an even flow is obtained over the height and the breadth of the flue gases before entering the OVO.

As there is a free approach to the first row of pipes of the first OVO, they are preferably embodied as evaporator pipes 8. The remaining pipes of the first OVO 15 are placed one behind the other, behind the evaporator pipes 8. The protection of the OVO pipes afforded by the evaporator pipes is especially enhanced if the evaporator pipes are embodied with a diameter that is slightly larger than that of the (viewed in the direction of flow of the flue gasses) OVO pipes behind them. In a further variant, the OVO pipes are embodied slightly oval, with the smallest diameter being oriented at right angles to the direction of flow of the flue gases. This reduces wear of the pipes resulting from erosion caused by fly ash in the flue gasses.

The prior art methods, in which the deposit of fly ash on the pipes of the OVO is always removed by vibrating the OVO pipes (for example, by striking the headers in which the ends of the pipes are fastened with a mechanical or pneumatic hammer) may be much improved by giving the OVO pipes natural frequencies that are different in different directions due to the difference in rigidity caused by the unroundness of the pipes. By causing the header to vibrate with these specific frequencies, the deposited fly ash can be removed in a controlled manner. By properly synchronising the natural frequencies of the pipes (all the same), a limited energy input will provide a maximum result. Alternatively, if this is difficult because the adhered mass of fly ash deposit is too different, it is also possible to give all the OVO pipes a different frequency (different also for different directions of vibration) whereby it does become possible to bring the individual pipes into resonance. A system is therefore preferred, in which the unround pipes have specifically chosen natural frequencies allowing the pipes to be brought into resonance.

In the second section 16 of the heat exchanger or the second OVO 16, the flue gas flow is already distributed evenly, a considerable amount of dust is already separated from the flue gases (by gravity and deposited on pipes) and moreover, the flue gas temperature has been lowered.

It is usual practice for the pipes of the superheater in a waste incineration boiler to be placed one behind the other (in-line, as shown in Fig. 3) in order to reduce the wear of the pipes in accordance with the above-mentioned principles. In other plants, where fouling and wear are less extreme than with waste incineration, the pipes are preferably placed in a staggered configuration because a heat exchanger constructed in this way is more compact. This is because in the same volume with the same pipe distance, the staggered pipe configuration comprises more pipes and a correspondingly larger surface for heat exchange.

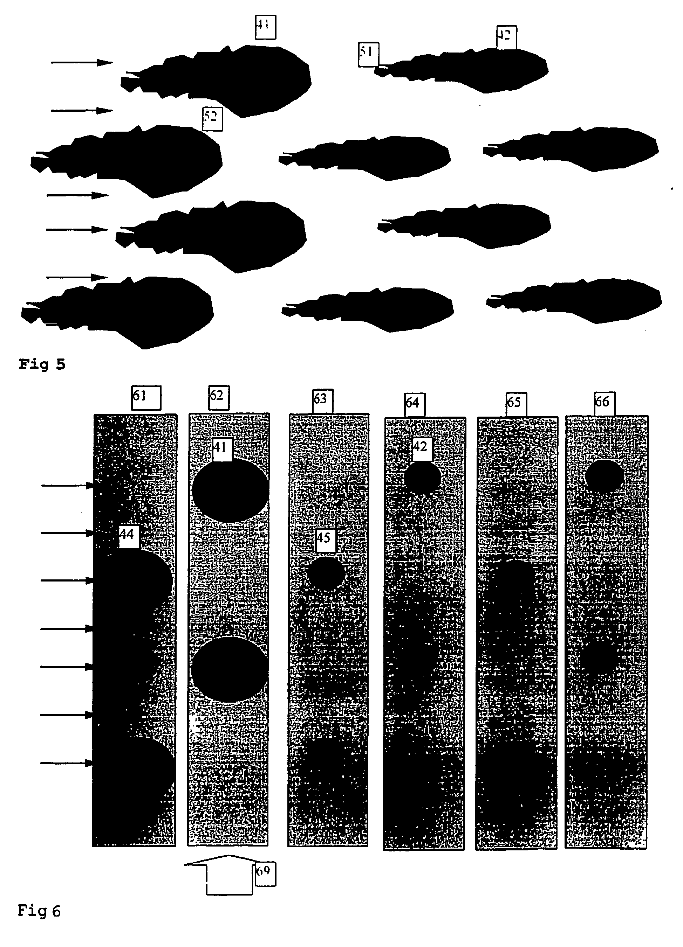

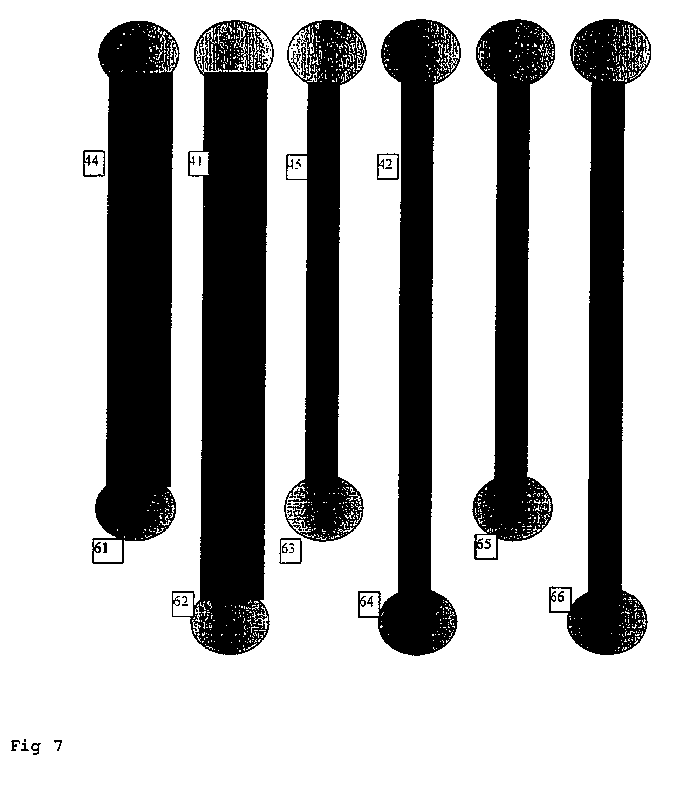

The pipes to be used in a waste incineration plant can be placed staggered, but the construction of the heat exchanger is not more compact, as shown in Figs. 4-7. On the contrary, this preferably applies the largest possible pipe distances (47, 48, and 49), see Fig. 4. This will actually raise the cost price of the heat exchanger only slightly, because if the distances between the pipes are increased, more material is only required for headers and housing while the number of welds for the heat exchanger remains the same. The result of these measures, however, is that the deposit on the pipes may grow longer (in the opposite direction of the flow of flue gas 33, as shown in Fig. 5), increasing the inertia forces on the deposited material when the pipes are vibrated by knocking action (69), see Fig. 6. When cleaning by means of shot peening or steam blowing, this advantage is less noticeable. Important is in particular that the distance (33 and 51) between the deposit (34) and the preceding pipe is as large as possible in order to insure that the pipe can continue to vibrate freely. Because if this distance (33) is less than the amplitude of the pipe vibration, the deposit of pipe (31) will touch the preceding pipe (30) causing the pipe to loose its vibration energy so that cleaning is no longer effective. In practice a sudden increase of fouling becomes apparent, necessitating other cleaning methods (such as explosives) or the boiler even has to be shut down for manual cleaning. By building a broad boiler one obtains the desired low flue gas velocities, and by combining this with the staggered configuration of the pipes, one achieves several advantages:
- The number of pipes per header is halved, so that the mass of the frame does not become too large for a knocking action to be effective.
- If a distance (48) is chosen to be the same as in the conventional configuration (37), the pipe distance widthways is more than doubled. This means that the minimum space between the pipes (49) is larger than in the conventional configuration (37) and there is correspondingly more space for fouling before problems arise with respect to the free passage (52).
- Compared with the usual in-line configuration (34), the deposit (51) may become much thicker before it touches the preceding pipe (51 with respect to 33).
- Because the distance to the next pipe (47) is larger, the Von Karman vortices (43) will be tempered somewhat, so that the pipes are subjected to less erosive wear.

The combination with this configuration compensates the extra costs of a broader boiler because of a considerable reduction of the running costs, due to the fact that fouling and wear are greatly reduced.

As a result of this proposed configuration, the lumps of fly ash deposit falling down during knocking may be larger. Therefore, if the pipes are arranged vertically, the distance at the lower side between the headers must be large enough to allow these lumps to pass through. In order to create this distance, the successive headers in the preferred embodiment are mounted at different heights. This is preferably done by alternatingly giving them a different height, which difference preferably corresponds approximately with the distance between two successive pipes (47). In practice, this may be optimized to a distance between 49 and 47. Fig. 7 shows a side view of a section consisting of six frames, comprising two rows of shield pipes 41, 44 and four rows of superheater pipes positioned behind these (only the rows 45, 42 are numbered). All the pipes are received in headers, of which the lower ones are indicated with reference numbers 61-66. These headers are positioned at different heights.

It is especially preferred to reduce the flue gas velocity in the flue gas through-put to less than 4 m/s, and preferably 2 to 3 m/s, and a flue gas velocity through the heat exchanger at the inlet of less than or equal to 4 m/s, at a counter flow operation of the heat exchanger, and wherein the flue gases at the inlet to the heat exchanger have a temperature below 700°C, preferably below 630°C.

The invention as described above and shown in the figures represents a preferred embodiment of the invention. The invention is limited by the appended claim only.

## Claims

1. A heat exchanger, wherein flue gases are conducted along pipes through which steam is conducted for the production of heated steam, wherein the heat exchanger (5) comprises shield pipes (8) whose diameter is different to the diameter of superheater pipes (15) which, viewed in the direction of flow, are provided immediately behind these, in order to minimise deposit, erosion and corrosion, **characterised in that** the diameter of the shield pipes (8) is smaller than the diameter of the superheater pipes (15).

## Patentansprüche

1. Wärmetauscher (5), bei welchem Verbrennungsgase entlang von Rohren geführt werden, durch die Dampf für die Herstellung von aufgeheiztem Dampf geleitet wird, wobei der Wärmetauscher (5) mit Schutzrohren (8) ausgerüstet ist, deren Durchmesser unterschiedlich im Vergleich zu dem Durchmesser von Erhitzungsrohren (15) ausgebildet ist, und wobei die Erhitzungsrohre (15) in Richtung des Dampfflusses unmittelbar an die Schutzrohre (8) anschließen, um Bodensatz, Erosion und Korrosion zu minimieren, **dadurch gekennzeichnet, dass** der Durchmesser der Schutzrohre (8) geringer als der Durchmesser der Erhitzungsrohre (15) ausgebildet ist.

## Revendications

1. Echangeur de chaleur, dans lequel des fumées sont guidées le long de tubes à travers lesquels de la vapeur est guidée, dans lequel l'échangeur de chaleur (5) comprend des tubes écrans (8) dont le diamètre est différent du diamètre des tubes de surchauffe (15) qui, vus dans la direction de l'écoulement, sont disposés immédiatement après ceux-ci, afin de minimiser les dépôts, l'érosion et la corrosion, **caractérisé en ce que** le diamètre des tubes écran (8) est plus petit que le diamètre des tubes de surchauffe (15).
